# EUROPÄISCHE PATENTSCHRIFT

(11) **EP 1 206 680 B1**
(45) Veröffentlichungstag und Bekanntmachung des Hinweises auf die Patenterteilung: **26.07.2006**
(21) Anmeldenummer: 00947813.2
(22) Anmeldetag: 26.06.2000
(51) Int. Cl.: G01C 3/04, G01C 17/00, G01S 5/14

(54) **OPTISCHES GERÄT**
OPTICAL DEVICE
APPAREIL OPTIQUE

(30) Priorität: 26.06.1999 DE 19929444
(43) Veröffentlichungstag der Anmeldung: 22.05.2002
(73) Patentinhaber: Dufek, Otto K., 71364 Winnenden (DE); Malmstrom, Karin, Sai Kung NT Hong Kong (CN); Lynam, Robin, Sai Kung NT Hong Kong (CN); Haakshorst, Eduart L., 76530 Baden-Baden (DE); Hoenig, Werner, Wenyu River Development Zone Shu Yi District Beijing 101300 (CN); Yao-Hoenig, Jiuhong, Wenyu River Development Zone Shu Yi District Beijing 101300 (CN)
(72) Erfinder: Dufek, Otto K., 71364 Winnenden (DE)
(74) Vertreter: Schuster, Gregor
(86) Internationale Anmeldenummer: PCT/DE2000/001994
(87) Internationale Veröffentlichungsnummer: WO 2001/001074

(56) Entgegenhaltungen:
- DE-A- 19 801 519
- US-A- 5 579 165
- US-A- 5 815 411
- US-A- 5 825 480

## Beschreibung

Die Erfindung geht aus von einem optischen Gerät (Fernrohr, Kamera, o. dgl.) zur optischen Erfassung von Objekten (geographischen Orten, Personen, Fahrzeugen u. dgl), deren Kenndaten in satellitengestützten Sendesystemen gespeichert sind.

Bei einem gattungsgemäßen bekannten optischen Gerät (DE-OS 43 12 310) werden über den Rechner unter Auswertung der Daten eines Satellitennavigationssystems sowie mit Kompassdaten angepeilte Objekte angepeilt und deren Identifikation "kognitiv verifiziert". Dies wird erreicht durch den Schnittpunkt von zwei Vektoren, nämlich einmal dem Richtungsvektor des Kompasses und andererseits durch den Ortungsvektor des Satellitensystems. Der Nachteil dieser Anlage besteht darin, dass eine nachträgliche Prüfung der Informationsdaten und dem Objekt erforderlich ist, da keine zuverlässige Zuordnung gegeben ist.

Bekannt ist auch eine optische Vorrichtung, insbesondere ein computergesteuertes Fernglas, das mit einer Entfernungsmesseinrichtung und in seinem Inneren mit einern zusätzlichen Bildschirm ausgerüstet ist. Über eine Sende- und Empfangseinheit sowie mittels eines Computers ist es in der Lage, Daten von einem global positioning system" zur Positionsbestimmung zu verarbeiten und für den Betrachter nützliche Zusatzinformationen auf dem Bildschirm zu generieren (US 5,579,165).

Ferner ist ein elektro-optisches Betrachtungssystem zur Verbesserung des Vorstellungsvermögens beim Betrachten einer realen Szene bekannt, das in der Lage ist, die gerade betrachtete Szene durch zusätzliche, aus einem Datenspeicher abrufbare bildliche Mittel und Informationen zu einem computergenerierten Bild zu ergänzen. Das System arbeitet mit einer satellitenagestützten Navigation zur Bestimmung der Position des Betrachters im Gelände sowie gegenüber der Satellitenanlage. Das elektro-optische Betrachtungssystem generiert in dem optischen Betrachtungsfeld eine Art Bildschirm, auf dem die Zusatzinformationen für den Betrachter sichtbar werden, welche von einem Computer mit den Daten der Kamera, des Satellitensystems und denen des Datenspeichers zu dem gewünschten Bild verknüpft werden (US 5,815,411).

Im Unterschied hierzu soll das optische Gerät zur optischen Erfassung von Objekten eine Einrichtung aufweisen, zur optischen Scharfeinstellung, jeweils des über eine Ziellinie betrachteten solchen Objekts. Unter Ziellinie ist hierbei die Achse zwischen Gerät und Objekt zu verstehen, die natürlich von der Himmelsrichtung, in die das Gerät gerichtet ist, bestimmt wird, aber auch, inwieweit das Gerät nach oben oder unten geschwenkt ist. Außerdem soll dieses Gerät eine Einrichtung zur Erfassung des Entfernungswertes zwischen dem Gerät und dem Objekt aufweisen, was mit optischen, aber auch sonstigen Mitteln erfolgen kann, wobei dieser Entfernungswert aus Daten bestehen soll, beispielsweise elektrischen Daten, die weiterverarbeitbar sind. Außerdem soll das Gerät eine Messeinheit zur Erfassung des Inklinationswinkels aufweisen, zwischen Erddatenkennlinien, beispielsweise Magnetkennlinien und der Ziellinie. Außerdem soll dieses Gerät eine Empfangseinrichtung zum Empfangen von Satellitensignalen aufweisen und es soll einen Rechner für die Datenverarbeitung haben, welcher oben genannten Entfernungswert, Daten zum Inklinationswinkel, Satellitensignale sowie die Daten der satellitengestützten Sendesysteme bzw. deren Speicher verarbeiten kann. Nicht zuletzt ist ein Informationsgeber zur gezielten Darstellung von Daten zum Objekt vorhanden, indem automatisch das gewünschte Rechnerergebnis dargestellt wird, beispielsweise in Form von Daten aus dem satellitengestützten Sendesystem, wie sie zum Positionieren, Orientieren und Navigieren von Personen oder Fahrzeugen bei solchen satellitengestützten Sendesystemen bekannt sind.

Der erfindungsgemäße Rechner verarbeitet hingegen auch den sich mit der Scharfeinstellung ändernden Entfernungswcrt und sein Programm ist derart gestaltet, dass Daten zum jeweils eingestellten Objekt nach der Scharfeinstellung über den Informationsgeber erscheinen. Der Vorteil hierbei ist vor allem eine saubere, zuverlässige Zuordnung von Informationsdaten und Objekt, beispielsweise eine Ortschaft, einer bestimmten Person oder auch eines bestimmten Fahrzeuges. Entsprechend ist ein solches Gerät auch vielseitig einsetzbar, sowohl bei Forschungs- oder Erkundungsprojekten, aber auch bei Notfällen und nicht zuletzt beim Militär, wo sich Irrtümer besonders schwerwiegend auswirken können.

Nach einer vorteilhaften Ausgestaltung der Erfindung arbeitet der Rechner ausschließlich mit elektronischen Mitteln.

Nach einer weiteren vorteilhaften Ausgestaltung der Erfindung dient als Informationsträger eine Anzeigeeinheit mit einem LCD (Flüssigkristallanzeige) mit transparenten Elektroden in einer Bildebene.

Nach einer weiteren vorteilhaften Ausgestaltung der Erfindung dient als Informationsträger ein Drucker, über den das Ergebnis ausgedruckt wird.

Nach einer weiteren vorteilhaften Ausgestaltung der Erfindung dient als Informationsträger ein Gerät zur Umsetzung der Daten in akustische Signale und einem Lautsprecher.

Nach einer weiteren vorteilhaften Ausgestaltung der Erfindung dient als Grundgerät ein Fernrohr. In einem Fernrohr kann dann innerhalb des Durchsichtsbereichs ein Display vorgesehen sein, so dass der Betrachter sofort nach Scharfstellung des Objekts erfährt, um was es sich dabei handelt.

Nach einer weiteren vorteilhaften Ausgestaltung der Erfindung erfolgt die Positionsbestimmung des optischen Gerätes über ein Navigationssatellitensystem. Solche Systeme sind, besonders bei Positionierungsverfahren, z.B. zum Navigieren von Personen und Fahrzeugen innerhalb von Ortschaften bekannt. Nach einer weiteren vorteilhaften Ausgestaltung der Erfindung wirkt die Messeinheit mit einem Kompass zusammen zur Erfassung des Azimutwinkels zwischen der Ziellinie und der Nord-Süd-Richtung.

Nach einer weiteren vorteilhaften Ausgestaltung der Erfindung arbeitet die Messeinheit mit einem Höhenmessgerät zur Erfassung des Höhenwinkels zwischen der Ziellinie und der Horizontalen und/oder der Vertikalen.

Weitere Vorteile und vorteilhafte Ausgestaltungen der Erfindung sind den Ansprüchen entnehmbar.

Alle in der Beschreibung und den nachfolgenden Ansprüchen dargestellten. Merkmale können sowohl einzeln als auch in beliebiger Kombination miteinander erfindungswesentlich sein.

## Patentansprüche

1. Optisches Gerät zur optischen Erfassung von Objekten, deren Kenndaten in satellitengestützten Sendesystemen gespeichert sind,
- mit einer Einrichtung zur optischen Scharfeinstellung jeweils eines entlang einer Ziellinie betrachteten solchen Objekts,
- mit einer Einrichtung zur Erfassung des Entfemungswertes zum Objekt,
- mit einer Messeinheit zur Erfassung des Inklinationswinkels von Erddatenlinien zur Ziellinie,
- mit einer Empfangseinrichtung zum Empfangen von Satellitensignalen,
- mit einem Informationsgeber zur gezielten Darstellung von Daten zum Objekt und
- mit einem Rechner für die Datenverarbeitung des Entfernungswertes, der Daten zum Inklinationswinkel, der Satellitensignale und der Daten der satellitengestützten Sendesysteme, wobei der Rechner den sich mit der Scharfeinstellung ändernden Entfernungswert verarbeitet
**dadurch gekennzeichnet,**
- **dass** mit der Scharfeinstellung programmgemäß und gezielt automatisch Kenndaten zum jeweils eingestellten Objekt am Informationsgeber erscheinen.

2. Gerät nach Anspruch 1, **dadurch gekennzeichnet, dass** als Informationsgeber satellitengestützte Sendesysteme bzw. deren Speicher dienen.

3. Gerät nach einem der vorhergehenden Ansprüche, **dadurch gekennzeichnet, dass** als Informationsgeber eine Anzeigeeinheit mit Flüssigkristallanzeige (LCD) mit transparenten Elektroden in der Bildebene arbeitet.

4. Gerät nach einem der vorhergehenden Ansprüche, **dadurch gekennzeichnet, dass** der Informationsgeber mit einem Drucker zum schriftlichen Ausdrucken der Information arbeitet.

5. Gerät nach einem der vorhergehenden Ansprüche, **dadurch gekennzeichnet, dass** die Informationsgeber mit einem Tonerzeuger und einem Lautsprecher arbeitet, über den die Information in hörbare Signale umsetzbar ist.

## Claims

1. An optical instrument for the optical recording of objects whose characteristic data are stored in satellite supported transmitting systems,
- with a device for the optical sharp focussing of such an object viewed along a line of sight,
- with a device for recording the value of the distance to the object,
- with a measuring unit for recording the angle of inclination of the ground data lines to the line of sight,
- with a receiving device for receiving satellite signals,
- with an information transmitter for specific representation of data on the object, and
- with a computer for data processing the distance value, the data on the inclination angle, the satellite signals and the data from the satellite supported transmitting systems, wherein the computer processes the distance value that varies with the sharp focussing,
**characterised in that**
- characteristic data on each object adjusted appear on the information transmitter with the sharp focussing, according to the program, specifically and automatically.

2. The instrument according to Claim 1, **characterised in that** satellite-supported transmitting systems or their memories are used as information transmitters.

3. The instrument according to one of the preceding claims, **characterised in that** an indicating unit, with a liquid crystal display (LCD), with transparent electrodes in the image plane, operates as an information transmitter.

4. The instrument according to one of the preceding claims, **characterised in that** the information transmitter operates with a printer for printing out the information.

5. The instrument according to one of the preceding claims, **characterised in that** the information transmitters operate with a sound generator and a loudspeaker whereby the information can be converted to audible signals.

## Revendications

1. Instrument optique pour la détection optique d'objets, dont les données caractéristiques sont sauvegardées dans des systèmes émetteurs assistés par satellite,
- avec un dispositif pour la mise au point optique fine respectivement d'un tel objet observé le long d'une ligne de collimation,
- avec un dispositif de détection de la valeur de distance par rapport à l'objet,
- avec une unité de mesure pour la détection de l'angle d'inclinaison de lignes de données terrestres par rapport à la ligne de collimation,
- avec un dispositif récepteur pour la réception de signaux de satellites,
- avec un transmetteur d'informations pour la représentation ciblée de données par rapport à l'objet et
- avec un ordinateur pour le traitement des données de la valeur de distance, des données concernant l'angle d'inclinaison, des signaux des satellites et des données des systèmes émetteurs assistés par satellite, l'ordinateur traitant les valeurs de distance qui se modifient avec la mise au point fine,
**caractérisé en ce que**
- en fonction du programme, à la mise au point fine et de façon automatique ciblée, des données caractéristiques concernant l'objet mis au point s'affichent sur le transmetteur d'informations.

2. Instrument selon la revendication 1,
**caractérisé en ce que** des systèmes émetteurs assistés par satellite ou les mémoires de ces derniers font office de transmetteur d'information.

3. Instrument selon l'une quelconque des revendications précédentes,
**caractérisé en ce qu'**une unité d'affichage avec affichage à cristaux liquide (LCD) avec des électrodes transparentes travaille dans le plan de l'image, en tant que transmetteur d'informations.

4. Instrument selon l'une quelconque des revendications précédentes, **caractérisé en ce que** le transmetteur d'informations travaille avec une imprimante pour l'édition écrite des informations.

5. Instrument selon l'une quelconque des revendications précédentes,
**caractérisé en ce que** le transmetteur d'informations travaille avec un générateur de tonalités et avec un haut-parleur, par l'intermédiaire duquel les informations sont transformables en signaux audibles.
